(19) Europäisches Patentamt
European Patent Office
Office européen des brevets

(11) **EP 2 790 983 B1**

(12) **EUROPÄISCHE PATENTSCHRIFT**

(45) Veröffentlichungstag und Bekanntmachung des Hinweises auf die Patenterteilung:
**04.11.2015 Patentblatt 2015/45**

(51) Int Cl.:
***B60T 8/172*** *(2006.01)*     ***B60T 8/1755*** *(2006.01)*

(21) Anmeldenummer: **12808255.9**

(22) Anmeldetag: **06.12.2012**

(86) Internationale Anmeldenummer:
**PCT/EP2012/005038**

(87) Internationale Veröffentlichungsnummer:
**WO 2013/087169 (20.06.2013 Gazette 2013/25)**

(54) **STEUERVORRICHTUNG FÜR EINEN KRAFTWAGEN, KRAFTWAGEN SOWIE VERFAHREN ZUM KONFIGURIEREN DER STEUERVORRICHTUNG**

CONTROL DEVICE FOR A MOTOR VEHICLE, MOTOR VEHICLE, AND METHOD FOR CONFIGURING THE CONTROL DEVICE

DISPOSITIF DE COMMANDE POUR VÉHICULE AUTOMOBILE, VÉHICULE AUTOMOBILE ET PROCÉDÉ DE CONFIGURATION DU DISPOSITIF DE COMMANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.12.2011 DE 102011121454**

(43) Veröffentlichungstag der Anmeldung:
**22.10.2014 Patentblatt 2014/43**

(73) Patentinhaber: **Audi AG**
**85045 Ingolstadt (DE)**

(72) Erfinder: **OBERMÜLLER, Anton**
**82549 Königsdorf (DE)**

(56) Entgegenhaltungen:
EP-A1- 1 564 097    EP-A1- 2 093 114
EP-A1- 2 093 115    EP-A2- 0 826 576
WO-A1-2006/077255    DE-A1-102007 018 949
US-A1- 2007 027 586    US-A1- 2010 131 145
US-B1- 6 816 804

EP 2 790 983 B1

**Beschreibung**

Die Erfindung betrifft eine Steuervorrichtung für einen Kraftwagen, mittels welcher das Fahrverhalten des Kraftwagens aktiv beeinflusst werden kann. Zu der Erfindung gehört auch ein Kraftwagen mit einer solchen Steuervorrichtung. Schließlich ist durch die Erfindung auch ein Verfahren bereitgestellt, mittels welchem die Steuervorrichtung konfiguriert werden kann.

Bei der erfindungsgemäßen Steuervorrichtung ist dabei vorgesehen, mittels einer Beobachtereinrichtung einen Schätzwert für eine nicht direkt in dem Kraftwagen messbare Betriebsgröße bereitzustellen. Unter einer Beobachtereinrichtung wird hier ein System verstanden, das aus bekannten Eingangsgrößen, die hier durch Sensorsignale gebildet werden, Schätzwerte für die benötigten, nicht direkt mess- oder beobachtbaren weiteren Betriebsgrößen bereitstellt. Dazu bildet ein Beobachter der Beobachtereinrichtung das Fahrverhalten des Kraftwagens in einem Modell nach, bei dem sich Zustandsgrößen entsprechend den Sensorsignalen verändern. Die Werte der Zustandsgrößen können dann als Schätzwerte für die nicht messbaren Betriebsgrößen verwendet werden. Eine Steuervorrichtung mit einer solchen Beobachtereinrichtung ist beispielsweise aus der DE 195 15 046 A1 bekannt.

Allgemein werden Steuervorrichtungen in einem Kraftwagen beispielsweise für eine Überlagerungslenkung, eine Hinterradlenkung, ein Torque-Vectoring (Aufteilen des Antriebsmoments auf einzelne Räder des Kraftwagens), radindividuelles Antreiben oder Bremsen, aktive Stabilisatoren oder eine Dämpferregelung verwendet. Die einzelnen hierzu bereitgestellten Aktoren zum Eingreifen in das Fahrverhalten werden in der Regel unabhängig voneinander angesteuert, d. h. die Steuergeräte für die einzelnen Aktoren entscheiden für sich, welcher Stelleingriff für die aktuelle Fahrsituation notwendig ist. Hierbei wird davon ausgegangen, dass sich eine so genannte friedliche Koexistenz ergibt, bei der sich keine Eingriffsüberlappung durch gleichzeitiges Aktivieren unterschiedlicher Aktoren ergibt, die zu einem instabilen Fahrverhalten führt. Dies macht es allerdings notwendig, den Grad des Eingriffs der einzelnen Aktoren, also deren Eingriffsstärke, soweit zu begrenzen, dass die Fahrstabilität in keiner Situation gefährdet ist. Hierdurch bleibt das Potenzial der vorhandenen Fahrwerksregelsysteme bei weitem hinter den Möglichkeiten zurück, wie sie in einzelnen, besonderen Fahrsituationen verfügbar wären, wenn der entsprechende Aktor stärker eingreifen dürfte. Um für einzelne Fahrsituationen das Potenzial eines Fahrwerksregelsystems voll ausschöpfen zu können, wird deshalb gemäß dem so genannten Global-Chassis-Control-Ansatz (GCC) eine zentrale Steuerinstanz in dem Kraftwagen bereitgestellt, welche die Ansteuerung aller vorhandenen Aktoren übernimmt. Ein Steuervorrichtung mit einer Global-Chassis-Steuerung ist beispielsweise aus der DE 10 2007 020 169 A1 bekannt.

Bei herkömmlichen Global-Chassis-Control-Ansätzen besteht dabei aber das Problem, dass man sich auf ein Modell für das Fahrverhalten des Kraftwagens verlassen muss, um zu ermitteln, welche Kombination von Aktoreingriffen am besten zur Beeinflussung des Fahrverhaltens geeignet ist. In der Regel wird hierzu ein Einspurmodell oder ein Zweispurmodell verwendet. Einem solchen Modell liegt aber in der Regel eine Annahme bzgl. linearer Zusammenhänge zugrunde, wie sie nur in verhältnismäßig moderaten Fahrsituationen vorliegen. Bei zunehmender Annäherung an einen Grenzbereich, wie etwa einer engen Kurvenfahrt bei hoher Geschwindigkeit, verliert ein solches Modell seine Genauigkeit, mit der es die realen Verhältnisse beschreibt, sodass keine zuverlässige Aussage über die Fahrzeugstabilität oder den Einfluss eines Stelleingriffs auf das Fahrverhalten ermöglicht ist. Somit ist auch keine Vorhersage des zukünftigen Fahrverhaltens als Folge eines Eingriffs mehr durchführbar.

Die Schwierigkeiten, die bei der Planung eines Eingriffs entstehen, wenn mehrere Aktoren zur Verfügung stehen, werden anhand der folgenden Beispiele noch einmal näher erläutert. In einer Untersteuersituation ist z. B. die aktive Vorderradlenkung zur Fahrzeugstabilisierung nicht geeignet. Im Übersteuerfall ist dagegen die Hinterradlenkung nicht die beste Wahl. Dennoch haben auch bei einer Untersteuersituation der Vorderradlenkwinkel und bei einer Übersteuersituation die Hinterradlenkung einen geringen Einfluss auf das Fahrverhalten. Eine Möglichkeit zur Abschätzung dahingehend, wie hoch dieser Einfluss ist, besteht während der Fahrt jedoch in der Regel nicht. Damit ist bei Vorhandensein mehrerer Aktoren zur Beeinflussung des Fahrverhaltens auch keine optimale Verteilung der einzustellenden Sollgrößen, also beispielsweise einer Gierrate, eines Schwimmwinkels oder einer Querbeschleunigung, auf die jeweiligen Aktoren möglich.

In der DE 10 2008 030 667 A1 sind ein Verfahren und eine Vorrichtung zum Schätzen von Parametern für ein Fahrdynamikregelsystem beschrieben. Als Parameter werden unter Anderem Schräglaufsteifigkeiten geschätzt. Die Schätzwerte werden für die Lösung eines Gleichungssystems aus Differentialgleichungen mittels eines numerischen Integrationsverfahrens benötigt. Eine weitere unbekannte Variable des Gleichungssystems ist der Schwimmwinkel des Fahrzeugs.

In der WO 99/67 115 A1 ist eine Regelschaltung zum Regeln der Fahrstabilität eines Fahrzeugs beschrieben, bei welcher eine Schräglaufsteifigkeit eines oder mehrerer Reifen dahingehend überwacht wird, ob diese Parameter von Normparametern abweichen. Bei dieser Regelschaltung wird als eine gemessene Eingangsgröße die Schwimmwinkelgeschwindigkeit erfasst.

In der DE 43 25 413 A1 ist ein Verfahren zur Bestimmung des Schwimmwinkels eines Fahrzeugs beschrieben. Der Schwimmwinkel wird aus dem Verhältnis der Fahrzeugquergeschwindigkeit und der Fahrzeuglängsgeschwindigkeit bestimmt. Die Fahrzeuglängsgeschwindigkeit wird gemessen, die Fahrzeugquergeschwindigkeit mittels einer Beobachtereinrichtung aus der Fahrzeugquerbeschleunigung berechnet.

In der EP 1 743 819 A1 sind ein Verfahren und eine Anordnung zur Bestimmung der Gier- und Rollbewegung bei einem Fahrzeug beschrieben. Bei Interpolationsfunktionen werden jeweils die Gierrate, die gemittelte Fahrzeuggeschwindigkeit sowie die vorne am Fahrzeug gemessene Querbeschleunigung als Parameter eingesetzt. Hierbei verwendete Korrekturkoeffizienten werden herstellerseitig im Rahmen umfassender Testreihen ermittelt, bei denen das Fahrzeug auch extremen Fahrzuständen ausgesetzt wird und die erhaltenen Gierraten- bzw. Gierbeschleunigungswerte und Querbeschleunigungswerte jeweils mit Messwerten eines Gierratensensors verglichen werden. Durch eine Kurvenanpassung an die entsprechenden Messpunkte werden die optimalen Koeffizienten für die Interpolationsfunktionen bestimmt und anschließend fest gespeichert.

Ein Verfahren sowie eine Vorrichtung gemäß dem Oberbegriff der unabhängigen Ansprüche 1 und 9 ist aus der EP 2 093 114 A1 bekannt

Eine Aufgabe der vorliegenden Erfindung besteht darin, den Einfluss einer Veränderung einer Einstellung eines Aktors des Kraftwagens auf das dessen Fahrverhalten genauer vorhersagen zu können.

Die Aufgabe wird durch eine Steuervorrichtung gemäß Patentanspruch 1, einen Kraftwagen gemäß Patentanspruch 8 sowie ein Verfahren gemäß Patentanspruch 9 gelöst. Vorteilhafte Weiterbildungen der Erfindung sind durch die Unteransprüche gegebenen.

Die erfindungsgemäße Steuervorrichtung weist somit eine Beobachtereinrichtung auf, die dazu ausgelegt ist, in Abhängigkeit von einem Sensorsignal des Kraftwagens wenigstens einen Schätzwert für eine Schräglaufsteifigkeit des Kraftwagens zu ermitteln, und diesen wenigstens einen ermittelten Schätzwert an einem Signalausgang bereitzustellen. Die Schräglaufsteifigkeit stellt hierbei den Proportionalitätsfaktor dar, über welchen der Schräglaufwinkel eines Rades mit der daraus resultierenden Seitenführungskraft zusammenhängt. In der Regel kann davon ausgegangen werden, dass die Schräglaufsteifigkeit eines Rades bei einem Kraftwagen ein unveränderlicher Wert ist, wenn der Kraftwagen sich in einer moderaten Fahrsituation befindet. Entsprechend wird bei dem Beobachtermodell z.B. auch gemäß der oben genannten Druckschrift DE 10 2007 020 169 A1 auch ein konstanter Wert verwendet, welcher im Rahmen eines Fahrversuchs ermittelt wird.

Bei der erfindungsgemäßen Steuervorrichtung ist der wenigstens eine Wert für die Schräglaufsteifigkeit dagegen variabel und wird durch die Beobachtereinrichtung geschätzt. Hierdurch ergibt sich der Vorteil, dass durch die Schätzung der Schräglaufsteifigkeit von selbst andere Einflüsse mit berücksichtigt werden, insbesondere eine Veränderung der Reifeneigenschaften (Profilabrieb, Erhitzung, Luftdruckänderung), eine Veränderung des Reibwerts des Fahrbahnuntergrunds entlang einer Fahrroute oder die Veränderung der Gesamtmasse des Kraftwagens, beispielsweise durch Beladung. Solche Werte müssen dann nicht mehr direkt gemessen werden, sondern sie fließen indirekt über den Schätzwert für die Schräglaufsteifigkeit in die Steuerung der Aktoren ein. Dieser Vorteil kommt bereits in moderaten Fahrsituationen zum Tragen. Ein weiterer Vorteil einer Schätzung der Schräglaufsteifigkeit ergibt sich in extremen Fahrsituationen, wenn kein linearer Zusammenhang mehr zwischen den Schräglaufwinkeln der einzelnen Räder und der daraus resultierenden Seitenführungskraft mehr besteht. Bei der erfindungsgemäßen Steuervorrichtung ergibt sich durch die Anpassung der Werte für die Schräglaufsteifigkeit automatisch eine lokale Linearisierung des nicht linearen Zusammenhangs, wodurch auch in extremen Fahrsituationen in bestimmten Grenzen eine Voraussage des Einflusses eines Eingriffs über einen Aktor auf das Fahrverhalten des Kraftwagens ermöglicht ist.

Neben einer Schätzung der Schräglaufsteifigkeiten ist die Beobachtereinrichtung zusätzlich dazu ausgelegt, in Abhängigkeit von dem wenigstens einen Sensorsignal des Kraftwagens auch einen Schätzwert für einen Schwimmwinkel des Kraftwagens zu ermitteln und an dem Signalausgang bereitzustellen. Aufgrund der hohen Kosten, die mit der Bereitstellung eines Sensors für den Schwimmwinkel verbunden sind, sind entsprechende Sensoren in Serienfahrzeugen in der Regel nicht bereitgestellt. Daher behilft man sich in der Regel bei der Entwicklung von Steueralgorithmen für Aktoren, indem der Schwimmwinkel vernachlässigt wird, d. h. es wird ein Schwimmwinkel $\beta = 0$ angenommen. Eine andere bekannte Vorgehensweise besteht im mathematischen Integrieren der Schwimmwinkelgeschwindigkeit. Dies ist jedoch nur über kurze Zeiträume hinweg durchführbar und unterliegt einer starken Drift. Durch die Ermittlung eines Schätzwerts für den Schwimmwinkel mittels der Beobachtereinrichtung ist es nun jedoch möglich, genauere Vorhersagen über eine Veränderung des Fahrverhaltens durch Eingriffe mittels der Aktoren zu erhalten, indem der zur Verfügung stehende Schätzwert für den Schwimmwinkel zugrunde gelegt wird.

Im Zusammenhang mit einer geeigneten Wahl des Beobachters in der Beobachtereinrichtung hat es sich als besonders zweckmäßig erwiesen, wenigstens eine aus den folgenden Schätzeinrichtungen bereitzustellen: einen Luenberger-Beobachter, der eine lineare Schätzung ermöglicht, oder einen stochastischen Beobachter, mit dem auch ein Messrauschen und andere stochastische Einflüsse bei der Schätzung berücksichtigt und so kompensiert werden können. Geeignete statistische Beobachter sind hierbei im Zusammenhang mit einer linearen statistischen Schätzung ein Kalman-Filter und im Zusammenhang mit einer nicht-linearen stochastischen Schätzung ein Extended Kalman-Filter (EKF), ein Unscented Kalman-Filter (UKF) und ein Divided Difference Kalman-Filter (DD1, DD2). Bei allen der genannten Schätzeinrichtungen ergibt sich der Vorteil, dass die Beobachtereinrichtung die Schätzwerte selbstständig auf Abweichungen hin adaptiert, wie sie während einer Fahrt des Kraftwagens durch die sich verändernden Einflüsse der Umgebung vorkommen.

Da im Gegensatz zum Stand der Technik bei der erfindungsgemäßen Steuervorrichtung mittels der Beobachtereinrichtung nun die Schräglaufsteifigkeiten als veränderbare Werte behandelt werden, kann sich, je nach Typ der verwendeten Schätzeinrichtung, das Problem ergeben, dass sich bei der Berechnung der Schätzwerte eine zu große Anzahl von Freiheitsgraden ergibt, so dass die Schätzung eventuell nur langsam konvergiert. Dem Problem wird erfindungsgemäß in einfacher Weise entgegengetreten, indem für wenigstens einen der folgenden Parameter der Beobachtereinrichtung ein Parameterwert auf einen vorbestimmen, konstanten Wert eingestellt ist: ein Messrauschen, ein Prozessrauschen. Diese Parameter ändern sich weniger stark als die Schätzwerte für die Schräglaufsteifigkeiten, sodass sich ihre Veränderung in der Beobachtereinrichtung vernachlässigen lässt.

Eine erfindungsgemäße Ausführungsform der Steuervorrichtung sieht vor, dass die Beobachtereinrichtung ein Einspurmodell des Kraftwagens umfasst, wie es an sich aus dem Stand der Technik bekannt ist. Hierbei wird nun aber bei der erfindungsgemäßen Steuervorrichtung dafür gesorgt, dass wenigstens ein Modellparameter des Einspurmodells in Abhängigkeit von dem Sensorsignal eingestellt wird. Mit anderen Worten wird das Modell selbst verändert, indem sich bei dem Modell nicht nur Zustandsgrößen entsprechend den Sensorsignalen verändern, sondern auch die Modellparameter selbst angepasst werden. Bei einer herkömmlichen Verwendung eines Modells bleiben dagegen die Modellparameter unverändert, und es ändern sich nur die Zustandsgrößen. Beispielsweise wird das Einspurmodell erfindungsgemäß über einen Beobachteransatz adaptiert, woraus sich dann die benötigten Größen, also die Schräglaufsteifigkeit bzw. der Schwimmwinkel ergeben.

Die erfindungsgemäße Steuervorrichtung ermöglicht das Bereitstellen des wenigstens einen Schätzwerts für die Schräglaufsteifigkeit auf der Grundlage einer Standardsensorik, wie sie in Serienkraftwagen verfügbar ist. Insbesondere ist es ausreichend, bei der Steuervorrichtung einen Gierratensensor und/oder einen Querbeschleunigungssensor vorzusehen.

Auf der Grundlage des Schätzwerts für die Schräglaufsteifigkeit, lassen sich Sollgrößen für das Fahrverhalten des Kraftwagens festlegen und dann entsprechende Steuersignale für einzelne Aktoren erzeugen. Dies ist insbesondere auf der Grundlage einer Global-Chassis-Steuerung möglich. Hierzu sind dann zweckmäßigerweise über den Signalausgang der Beobachtereinrichtung eine Steuereinrichtung für eine solche Global-Chassis-Control gekoppelt, welche dazu ausgelegt ist, in Abhängigkeit von den über den Signalausgang empfangenen Schätzwerten die Mehrzahl der Sollgrößen festzulegen, insbesondere eine Sollgierrate, einen Sollschwimmwinkel und/oder eine Sollquerbeschleunigung. Zum Einstellen des Fahrverhaltens des Kraftwagens wird dann die Mehrzahl der Aktoren gemäß den Sollgrößen in an sich bekannter Weise angesteuert.

Geeignete Aktoren für den Einsatz in der erfindungsgemäßen Steuervorrichtung sind: eine Überlagerungslenkung, eine Hinterradlenkung, eine Torque-Vectoring-Einrichtung, wenigstens ein aktiver Stabilisator, wenigstens ein aktiver Dämpfer, ein Wankstabilisator und eine Antriebs- oder Bremseingriffsregelung. Diese Aktoren lassen sich auf der Grundlage der Schätzwerte der Beobachtereinrichtung zuverlässig derart steuern, dass auch in extremen Fahrsituationen keine kritische Eingriffsüberlappung verursacht wird.

Neben der bisher beschriebenen erfindungsgemäßen Steuervorrichtung selbst gehört zu der Erfindung auch ein Kraftwagen, in dem eine Ausführungsform der erfindungsgemäßen Steuervorrichtung eingebaut ist.

Wie bereits beschrieben, ist es bei der erfindungsgemäßen Steuervorrichtung nötig, bei der Beobachtereinrichtung einen oder mehrere von deren Parametern auf einen konstanten Wert festzulegen, um die schnelle Schätzung der Schräglaufsteifigkeiten der Räder zu ermöglichen. Um in einem solchen Fall die Steuereinrichtung in geeigneter Weise konfigurieren zu können, ist das erfindungsgemäße Verfahren vorgesehen. Hierbei wird die Steuervorrichtung in einem Test-Kraftwagen betrieben, welcher wenigstens einen Sensor für eine Messgröße aufweist, zu welcher die Beobachtereinrichtung der Steuervorrichtung einen Schätzwert ermittelt. Im Zusammenhang mit dem erfindungsgemäßen Verfahren muss es sich bei dem Schätzwert nicht unbedingt um einen solchen handeln, der auch an dem Signalausgang bereitgestellt wird. Es kann sich auch um einen internen Schätzwert handeln, aus dem wiederum andere Größen hergeleitet werden.

Gemäß dem Verfahren wird in Abhängigkeit von den Messwerten der Messeinrichtung für den festzulegenden Parameter der Beobachtereinrichtung ein Parameterwert ermittelt, durch welchen ein Unterschied zwischen den Messwerten einerseits und den Schätzwerten der Beobachtereinrichtung andererseits ein vorbestimmtes Kriterium erfüllt. Mit anderen Worten wird durch die Testfahrt mittels des Test-Kraftwagens ein Vergleich zwischen den Schätzwerten einerseits und den Messwerten des Sensors andererseits durchgeführt und der Parameter der Beobachtereinrichtung derart eingestellt, dass sich ein nach dem Kriterium günstiges Schätzverhalten ergibt. So sollte gemäß dem Kriterium der Unterschied zwischen dem Messwert und dem Schätzwert unterhalb eines Schwellenwerts liegen, insbesondere sollte er minimiert werden.

Bei dem Testwagen ist zweckmäßigerweise ein Sensor für einen Schwimmwinkel bereitgestellt, wie er in Serienfahrzeugen aufgrund von dessen Bereitstellungskosten nicht verfügbar ist. Der Schwimmwinkel ist ein Parameter, der in zahlreichen Schätzeinrichtungen für Beobachter eine wesentliche Rolle spielt. Durch Vergleichen des geschätzten Schwimmwinkels mit dem gemessenen Schwimmwinkel lassen sich insbesondere Kovarianzmatrizen für ein Messrauschen und ein Prozessrauschen ermitteln, wie sie ansonsten durch die Beobachtereinrichtung während des normalen Betriebs geschätzt werden müssen, was zu einer Verschlechterung der Schätzgenauigkeit oder einer Verlangsamung des Schätzvorganges für die Schräglaufsteifigkeiten führen kann.

Die Erfindung wird im Folgenden anhand von Ausführungsbeispielen näher erläutert. Dazu zeigt:

Fig. 1  eine schematische Darstellung eines Kraftwagens gemäß einer Ausführungsform des erfindungsgemäßen Kraftwagens;

Fig. 2  ein Diagramm mit einem Graphen, durch welchen schematisch ein Zusammenhang zwischen einem Schräglaufwinkel und einer daraus resultierenden Seitenführungskraft gezeigt ist; und

Fig. 3  eine Steuervorrichtung gemäß einer Ausführungsform der erfindungsgemäßen Steuervorrichtung.

Die Beispiele stellen bevorzugte Ausführungsformen der Erfindung dar.

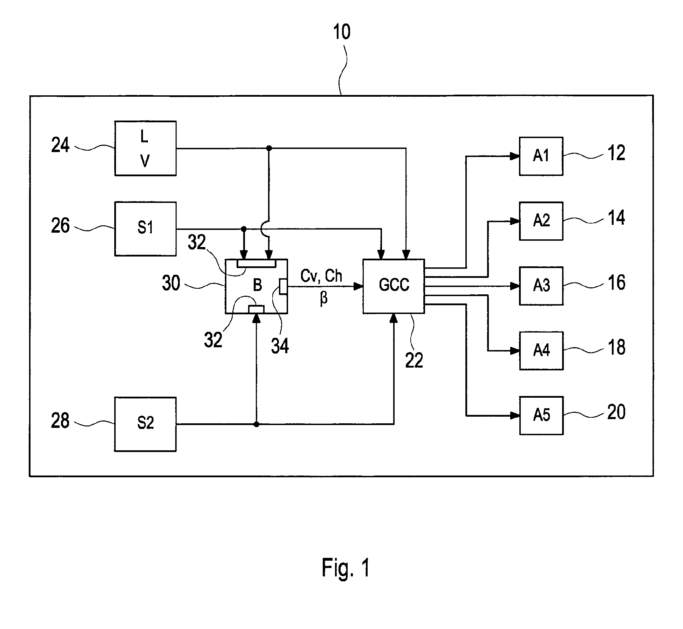

In Fig. 1 ist ein Kraftwagen 10 gezeigt, bei welchem eine Mehrzahl von Aktoren 12, 14, 16, 18, 20 durch eine Global-Chassis-Control-Steuereinrichtung oder kurz Steuereinrichtung 22 gesteuert werden. Die Steuereinrichtung 22 empfängt eine Information über einen aktuellen Lenkwinkel L und eine aktuelle Fahrzeuggeschwindigkeit V von einem Bordcomputer 24. Des Weiteren empfängt die Steuereinrichtung 22 von Sensoren 26, 28 Sensorsignale. Die Signale des Bordcomputers 24 und der Sensoren 26, 28 werden auch an eine Beobachtereinrichtung 30 übertragen, welche zusätzliche, in dem Kraftwagen 10 nicht messbare Größen ermittelt und ebenfalls an die Steuereinrichtung 22 übermittelt.

Bei dem Kraftwagen 10 kann es sich beispielsweise um einen Personenkraftwagen oder einen Lastkraftwagen handeln. Die Aktoren 12 bis 20 können beispielsweise jeweils Bestandteil einer der folgenden Einrichtungen zum Steuern des Fahrverhaltens des Kraftwagens 10 sein: einer Überlagerungslenkung, einer Hinterradlenkung, einer Torque-Vectoring-Einrichtung, eines aktiven Stabilisators, eines aktiven Dämpfers, eines Wankstabilisators oder einer Antriebs- oder Bremseingriffsregelung, wie etwa einem ESP oder ABS. Bei den Sensoren 26 und 28 kann es sich beispielsweise um einen Gierratensensor und einen Querbeschleunigungssensor handeln. Die beschriebenen Komponenten des Kraftwagens 10 können für den Austausch der Daten beispielsweise über einen Datenbus, wie etwa einen CAN-Bus, miteinander gekoppelt sein. Die Beobachtereinrichtung 30 und die Steuereinrichtung 22 können als Steuerprogramme auf einer Prozessoreinheit sein, wie beispielsweise einem Mikrocontroller oder einem FPGA (Field Programmable Gate Array) oder einem ASIC (Application-Specific Integrated Circuit) oder einer General Purpose CPU (Central Processing Unit).

Die Sensoren 26, 28 des Kraftwagens 10 sind Bestandteil einer Standard-Fahrzeug-Sensorik. Dennoch ist es bei dem Kraftwagen 10 ermöglicht, auch in extremen Fahrsituationen vorherzusagen, welche Folgen ein Eingriff mittels der Aktoren 12 bis 20 auf das zukünftige Fahrverhalten des Kraftwagens 10 hat. Dies wird durch die Steuereinrichtung 22 erreicht, indem für eine Stabilisierung des Fahrverhaltens Sollgrößen, wie etwa eine Gierrate, ein Schwimmwinkel und eine Querbeschleunigung, mit mehreren der Aktoren 12 bis 20 zugleich eingestellt werden, wobei jeder der Aktoren 12 bis 20 hierbei mit seinem vollen Potenzial ausgeschöpft wird.

Um für die Steuereinrichtung 22 eine genaue Vorhersage des Fahrverhaltens in Abhängigkeit von den Eingriffen der Aktoren 12 bis 20 zu ermöglichen, empfängt die Beobachtereinrichtung 30 über einen Signaleingang 32 die Sensorsignale der Sensoren 26, 30 und die Signale des Bordcomputers 24. In der Beobachtereinrichtung 30 ist eine Schätzeinrichtung bereitgestellt, durch welche die empfangenen Daten ausgewertet werden. Bei der Schätzeinrichtung kann es sich beispielsweise um eine lineare Schätzeinrichtung, wie etwa einen Luenberger-Beobachter, handeln oder auch um eine lineare stochastische Schätzeinrichtung, wie etwa einen Kalman-Filter, oder auch um eine nicht-lineare stochastische Schätzeinrichtung, wie einen Extended Kalman-Filter, einen Unscented Kalman-Filter oder einen Divided Difference Kalman-Filter. Auch eine Kombination mehrer Schätzeinrichtungen ist möglich.

Die Schätzeinrichtung der Beobachtereinrichtung 30 enthält zudem ein Einspurmodell, bei dem z. B. eine Schräglaufsteifigkeit Cv für das Vorderrad und eine Schräglaufsteifigkeit Ch für das Hinterrad des Einspurmodells als Adaptionsparameter freigegeben sind, d. h. dass diese Modellparameter in der Schätzeinrichtung über einen Beobachtermechanismus zur Minimierung eines Schätzfehlers angepasst werden können. Ziel der Schätzeinrichtung ist es, die Schräglaufsteifigkeiten Cv, Ch im Einspurmodell so anzupassen, dass Ausgangsgrößen des Einspurmodells (Gierrate, Schwimmwinkel, Querbeschleunigung) mit den tatsächlich anliegenden Werten für die Gierrate und die Querbeschleunigung, wie sie durch die Sensorsignale angezeigt sind, sowie mit den tatsächlichen Schwimmwinkel des Kraftwagens 10 übereinstimmen. Die Übereinstimmung ist insbesondere auch dann gegeben, wenn sich während der Fahrt die Beschaffenheit der Reifen oder der Reibwert der Fahrbahn ändert oder wenn der Kraftwagen beladen wird. Über einem Signalausgang 34 der Beobachtereinrichtung 30 werden die geschätzten Größen für die Schräglaufsteifigkeit Cv, Ch sowie des geschätzten Schwimmwinkels $\beta$ an die Steuereinrichtung 22 übertragen.

Die Beobachtereinrichtung 30 kann sowohl die Schräglaufsteifigkeiten Cv, Ch als auch den Schwimmwinkel β schätzen, ohne dass es hierbei zu einer signifikanten Verzögerung der Konvergenz bei der Schätzung kommt. Hierzu wurden andere Parameter der Beobachtereinrichtung 30 bei ihrer Herstellung oder beim Einbau in den Kraftwagen 10 auf einen festen Wert eingestellt, sodass sich bei der Beobachtereinrichtung eine eindeutige Bestimmbarkeit der Schätzparameter ergibt. Für diese Parametrisierung oder Kalibrierung der Beobachtereinrichtung 30 wurde eine vergleichbare Beobachtereinrichtung in einem Testfahrzeug betrieben, welches ein System zur Messung des Schwimmwinkels aufwies. Durch Vergleichen des gemessenen Schwimmwinkels mit dem von der Beobachtereinrichtung geschätzten Schwimmwinkel β wurde für die festzulegenden Parameter ein geeigneter Wert gefunden, welcher zur Übereinstimmung von gemessenen und geschätzten Werten für die Gierrate, den Schwimmwinkel und die Querbeschleunigung führte. Dieser Wert für den einzustellenden Parameter wurde dann in der Beobachtereinrichtung 30 des Kraftwagens 10 eingestellt, welcher ohne die Messeinrichtung für den Schwimmwinkel ausgestattet ist. Damit kann die Beobachtereinrichtung 30 als echtzeitfähiger Schätzer sowohl der Schräglaufsteifigkeiten Cv, Ch als auch des Schwimmwinkels β auf Basis der Fahrzeugseriensensorik eingesetzt werden.

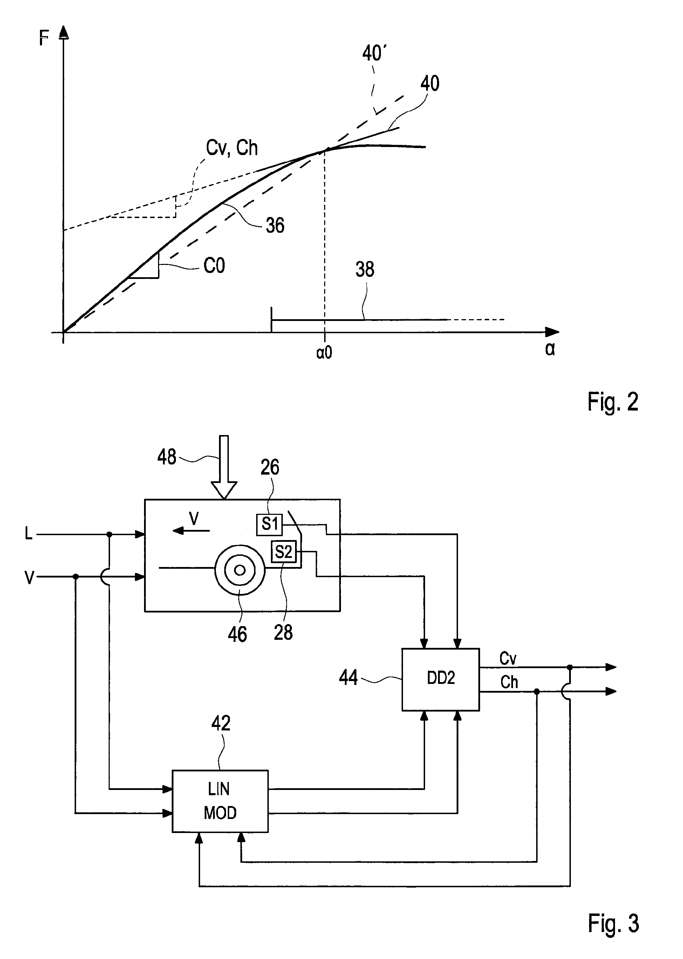

Anhand von Fig. 2 ist erläutert, wie durch das Schätzen der Schräglaufsteifigkeit mittels der Beobachtereinrichtung 30 zusätzlich das in der Beobachtereinrichtung 30 enthaltene Einspurmodell immer an den aktuellen und insbesondere in extremen Fahrsituationen nicht-linearen Zusammenhang zwischen einem Schräglaufwinkel α eines Rades und der an dem Rad aus dem Schräglaufwinkel α resultierenden Seitenführungskraft F angepasst ist.

In Fig. 2 ist dazu ein Graph 36 gezeigt, welcher den Zusammenhang schematisch veranschaulicht. Für eine moderate Fahrsituation, in welcher der Kraftwagen 10 bei einer gegebenen Geschwindigkeit einen verhältnismäßig geringen Schräglaufwinkel α aufweist, verläuft der Graph 36 gerade, also gemäß einem linearen, proportionalen Zusammenhang zwischen dem Schräglaufwinkel α und der Seitenführungskraft F. In Fig. 2 ist die konstante Steigung des Graphs 36 in diesem Bereich als Steigungsdreieck für die konstante Steigung C0 angedeutet. Wird bei der gegebenen Geschwindigkeit der Schräglaufwinkel α vergrößert, baut das Rad nicht in dem selben Maße weiter eine Seitenführungskraft F auf, sondern es ergibt sich ein Bereich 38 einer extremen Fahrsituation, in welcher der Zusammenhang zwischen dem Schräglaufwinkel α und der Seitenführungskraft F nichtlinear verläuft. Gemäß dem Stand der Technik haben Steuereinrichtungen, welche die Funktion der Steuereinrichtung 22 erfüllen sollen, für einen extremen Fahrsituationsbereich 38 nicht die Möglichkeit, ein Fahrverhalten zuverlässig zu ermitteln. Grund dafür ist, dass der in Fig. 2 gezeigte Zusammenhang in der Regel lediglich auf der Grundlage eines linearen Zusammenhangs mit dem konstanten Steigungswinkel CO modelliert wird. Indem durch die Beobachtereinrichtung die Schräglaufsteifigkeit für das Rad, also Cv bzw. Ch, angepasst wird, ergibt sich auch in dem Bereich 38 der extremen Fahrsituation die Möglichkeit, den Graphen 36 des tatsächlichen Wirkzusammenhangs zwischen dem Schräglaufwinkel α und der Seitenführungskraft F um einen aktuellen Schräglaufwinkel α0 herum durch einen linearisierten Graphen 40 anzunähern. Die Gerade der Cv,Ch-Schätzung kann auch eine Sekante 40' darstellen anstelle einer Tangente, wie sie der Graph 40 bildet. Der Graph 40' geht dann vom Nullpunkt des Koordinatensystems zum entsprechenden Punkt im nicht-linearen Bereich der Reifenkennlinie. Bevorzugtes Ziel ist es aber, eine Tangente zu ermitteln.

Durch die geschätzten Schräglaufsteifigkeiten Cv, Ch liegt für die Steuereinrichtung 22 daher die Möglichkeit vor, den Einfluss einer Stellgröße für die Aktoren 12 bis 20 auf das Fahrverhalten des Kraftwagens 10 zu beurteilen. Gemäß dem Einspurmodell wird die Seitenführungskraft Fv für die Vorderachse und die Seitenführungskraft Fh für die Hinterachse wie folgt berechnet:

$$Fv = Cv * ( δv - β - Lv * Ψ' / v ) \text{ bzw.}$$

$$Fh = Ch * ( δh - β + Lh * Ψ' / v ).$$

In der Formel sind zusätzlich zu den bereits beschriebenen Größen noch der Vorderradlenkwinkel δv und der Hinterradlenkwinkel δh, der Abstand Lv des Vorderrads zum Schwerpunkt des Kraftwagens, der Abstand Lh des Hinterrads zum Schwerpunkt und die Gierrate oder Giergeschwindigkeit Ψ' (zeitliche Ableitung des Gierwinkels Ψ) angegeben. Da bei dem Kraftwagen 10 die Schräglaufsteifigkeiten Cv, Ch und der Schwimmwinkel β durch die Beobachtereinrichtung 30 geschätzt sind, können die Seitenführungskräfte Fv, Fh sehr genau bestimmt werden. Damit kann z. B. der Einfluss des Vorderradlenkmittels δv oder des Hinterradlenkwinkels δh auf das Fahrverhalten berechnet werden. Durch eine Erweiterung des Einspurmodells können dann auch in bekannter Weise Einflüsse eines Torque-Vectoring, eines Antriebs- oder Bremseingriffs, einer Dämpferregelung, einer Wankstabilisation und weiterer Eingriffe eines oder mehrerer der Aktoren 12 bis 20 auf das Fahrverhalten beurteilt werden. Damit kann berechnet werden, ob bei den aktuell geschätzten Schräglaufsteifigkeiten Cv, Ch und dem damit aktuellen Fahrverhalten ein Stelleingriff zur Instabilität des Kraftwagens 10 führt. Für diese Vorhersage muss der Stelleingriff nicht tatsächlich durchgeführt werden. Eine solche Vorhersage kann beispielsweise getroffen werden, indem das aus dem Einspurmodell in bekannter Weise herleitbare dynamische Fahrverhalten ermittelt und hieraus dann der Eigenlenkgradient oder Eigenwerte des auf der Grundlage des Einspurmodells ermittelten dynamischen Systems berechnet werden. Umgekehrt kann nun anstelle einer Vorhersage auch gezielt berechnet werden, welche Stellgröße zur Umsetzung des Sollverhaltens notwendig ist. Mit anderen Worten können nun gezielt durch die Steuereinrichtung 22 geeignete Steuersignale für die Aktoren 12 bis 20 ermittelt werden, um ein stabiles Fahrverhalten zu erreichen. Dies ist auch möglich, wenn mehrere Aktoren zur Beeinflussung des Fahrverhaltens vorhanden sind. Über die geschätzten Schräglaufsteifigkeiten Cv, Ch kann jeweils das Eingriffspotenzial jedes einzelnen Stelleingriffs eines der Aktoren 12 bis 20 bewertet und beispielsweise auf der Grundlage einer mathematischen Kostenfunktion für einen Optimierungsalgorithmus die beste Verteilung der Sollwertvorgabe auf die Aktoren 12 bis 20 ermittelt werden. Damit ist es möglich, das vorhandene Potential des aus den Aktoren 12 bis 20 und der Steuereinrichtung 22 gebildeten Fahrwerkregelsystems optimal zu nutzen.

In Fig. 3 ist eine Steuervorrichtung für eine aktive Hinterachslenkung gezeigt, bei welcher eine modellbasierte Zustandsschätzung auf der Grundlage eines linearen Modells 42 erfolgt. Das lineare Modell 42 ist adaptiv, indem durch ein Kalman-Filter 44, das beispielsweise ein Divided Difference Kalman-Filter sein kann, regeltechnisch Modellparameter, hier Schräglaufsteifigkeiten Cv, Ch, angepasst werden. Das lineare Modell 42 kann beispielsweise ein Einspurmodell sein. Durch das Modell 42 wird in Abhängigkeit von einem vorgegebenen Lenkwinkel L für ein Hinterrad 46 eines Kraftwagens und eine vorgegebene Fahrgeschwindigkeit v des Kraftwagens ermittelt, welche Gierrate und welche Querbeschleunigung auf den Kraftwagen wirken müsste. Die geschätzten Werte werden an das Kalman-Filter 44 übertragen. Das Kalman-Filter 44 empfängt zusätzlich von Sensoren 26, 28 des Kraftwagens tatsächliche Messwerte zu der Gierrate und der Querbeschleunigung. Bei den Sensoren 26, 28 des in Fig. 3 gezeigten Kraftwagens kann es sich um Sensoren handeln, die mit den in Fig. 1 gezeigten Sensoren 26 bzw. 28 vergleichbar sind. Aus diesem Grund sind auch gleiche Bezugszeichen vergeben. Durch das Kalman-Filter 44 wird ein Vergleich der gemessenen Werte für die Querbeschleunigung und die Gierrate und der durch das Modell 42 geschätzten entsprechenden Werte durchgeführt. Für die Schräglaufsteifigkeiten Cv, Ch werden durch das Kalman-Filter 44 Werte berechnet, welche den Unterschied zwischen den Schätzwerten und den Messwerten minimieren. Die von dem Kalman-Filter 44 derart ermittelten verbesserten Modellparameter werden an das lineare Modell 42 übertragen und dort für weitere Prädiktionen verwendet.

Während einer Fahrt des Kraftwagens wirken auf das Hinterrad 46 Umwelteinflüsse 48, wie beispielsweise eine Witterung, ein veränderliches Reifenprofil, eine Zuladung des Kraftwagens und eine Beschaffenheit der Fahrbahn. Anstatt nun all diese Einflüsse gesondert zu erfassen, wird bei der in Fig. 3 gezeigten Steuervorrichtung der Einfluss der Umwelteinflüsse 48 auf das Fahrverhalten des Kraftwagens, und insbesondere auf das Hinterrad 46, durch die veränderlichen Werte für die Schräglaufsteifigkeiten Cv, Ch über das Kalman-Filter 44 nachgebildet. Sowohl die von dem Kalman-Filter 44 geschätzten Schräglaufsteifigkeiten Cv, Ch als auch die durch das lineare Modell 42 zusätzlich geschätzten Werte, wie beispielsweise ein Schwimmwinkel, können an (nicht dargestellte) Steuergeräte übertragen werden, wo sie zur Steuerung von (nicht dargestellten) Aktoren des Kraftwagens zugrunde gelegt werden können. Somit müssen die einzelnen Umwelteinflüsse 48 nicht durch separate Sensoren erfasst werden, um sie bei der Steuerung berücksichtigen zu können.

**Patentansprüche**

1. Steuervorrichtung für einen Kraftwagen (10), welche eine Beobachtereinrichtung (30, 44) aufweist, die dazu ausgelegt ist, über einen Signaleingang (32) wenigstens ein Sensorsignal eines Sensors (26, 28) des Kraftwagens (10) zu empfangen, in Abhängigkeit dem wenigstens einen Sensorsignal wenigstens einen Schätzwert für eine Schräglaufsteifigkeit (Cv, Ch) des Kraftwagens (10) zu ermitteln und den wenigstens einen ermittelten Schätzwert an einem Signalausgang (34) bereitzustellen, wobei die Beobachtereinrichtung (30) zusätzlich dazu ausgelegt ist, in Abhängigkeit von dem wenigstens einen Sensorsignal einen Schätzwert für einen Schwimmwinkel (β) des Kraftwagens (10) zu ermitteln und an dem Signalausgang (34) bereitzustellen, wobei die Beobachtereinrichtung (30, 44) wenigstens eine aus den folgenden Schätzeinrichtungen umfasst: einen Luenberger-Beobachter, einen stochastischen Beobachter,
**dadurch gekennzeichnet, dass**
ein Parameterwert für wenigstens einen der folgenden Parameter der Beobachtereinrichtung (30, 44) auf einen vorbestimmten, konstanten Wert eingestellt ist: ein Messrauschen, ein Prozessrauschen; und
die Beobachtereinrichtung (30, 44) ein Einspurmodell des Kraftwagens (10) umfasst, wobei die Beobachtereinrichtung (30, 44) dazu ausgelegt ist, wenigstens einen Modellparameter des Einspurmodells in Abhängigkeit von dem Sensorsignal einzustellen.

2. Steuervorrichtung nach Anspruch 1, wobei die Beobachtereinrichtung (30, 44) ein Kalman-Filter umfasst.

3. Steuervorrichtung nach einem der vorhergehenden Ansprüche, wobei der wenigstens eine Modellparameter die Schräglaufsteifigkeit (Cv, Ch) umfasst.

4. Steuervorrichtung nach einem der vorhergehenden Ansprüche, bei welcher über den Signaleingang (32) wenigstens einer der folgenden Sensoren mit der Beobachtereinrichtung (30, 44) gekoppelt ist: ein Querbeschleunigungssensor (26), ein Gierratensensor (28).

5. Steuervorrichtung nach einem der vorhergehenden Ansprüche, bei welcher über den Signalausgang (34) eine Steuereinrichtung (22) für eine "Global-Chassis-Control" mit der Beobachtereinrichtung (30) gekoppelt ist, wobei die Steuereinrichtung (22) dazu ausgelegt ist, in Abhängigkeit von den über den Signalausgang (34) empfangenen Schätzwerten eine Mehrzahl von Sollgrößen festzulegen und zum Einstellen des Fahrverhaltens des Kraftwagens gemäß den Sollgrößen eine Mehrzahl von Aktoren (12 bis 20) anzusteuern.

6. Steuervorrichtung nach Anspruch 5, wobei als Sollgrößen eine Sollgierrate, ein Sollschwimmwinkel und/oder eine Sollquerbeschleunigung festgelegt werden.

7. Steuervorrichtung nach einem der vorhergehenden Ansprüche, bei welcher über den Signalausgang (34) wenigstens eine aus den folgenden Aktoren (12 bis 20) mit der Beobachtereinrichtung (30) gekoppelt ist: ein Überlagerungslenkung, eine Hinterradlenkung, eine Torque-Vectoring-Einrichtung, wenigstens ein aktiver Stabilisator, wenigstens ein aktiver Dämpfer, ein Wankstabilisator, eine Antriebs- und eine Bremseingriffsregelung.

8. Kraftwagen (10) mit einer Steuervorrichtung gemäß einem der vorhergehenden Ansprüche.

9. Verfahren zum Konfigurieren einer Steuervorrichtung gemäß einem der Ansprüche 1 bis 7, indem die Steuervorrichtung in einem Test-Kraftwagen betrieben wird, welcher wenigstens einen Sensor für eine Messgröße aufweist, zu welcher die Beobachtereinrichtung der Steuervorrichtung einen Schätzwert ermittelt, und in Abhängigkeit von Messwerten der Messeinrichtung für einen Parameter der Beobachtereinrichtung ein Parameterwert ermittelt wird, durch welchen ein Unterschied zwischen den Messwerten und Schätzwerten ein vorbestimmtes Kriterium erfüllt,

**dadurch gekennzeichnet, dass**

als Messeinrichtung wenigstens ein Sensor für einen Schwimmwinkel des Test-Kraftwagens bereitgestellt wird und durch Vergleichen des geschätzten Schwimmwinkels mit dem gemessenen Schwimmwinkel als Parameterwerte Kovarianzmatrizen für ein Messrauschen und ein Prozessrauschen ermittelt werden, die dann für den normalen Betrieb in der Steuervorrichtung festgelegt werden.

## Claims

1. A control device for a motor vehicle (10) which has an observer arrangement (30, 44), which is designed to receive at least one sensor signal of a sensor (26, 28) of the motor vehicle via a signal input (32), depending on the at least one sensor signal to ascertain at least one estimated value for a slip resistance (Cv, Ch) of the motor vehicle (10) and to provide the at least one ascertained estimated value, wherein the observer arrangement (30) is additionally designed, depending on the at least one sensor signal to ascertain and to provide at the signal output (34) an estimated value for a slide slip angle ($\beta$) of the motor vehicle (10), wherein the observer arrangement (30, 44) comprises at least one of the following estimation devices: a Luenberger observer, a stochastic observer,

   **characterized in that**

   a parameter value for at least one of the following parameters of the observer arrangement (30, 44) is adjusted to a predetermined, constant value: a measurement noise, a process noise; and the observer arrangement (30, 44) comprises a one-track model of the motor vehicle (10), wherein the observer arrangement (30, 44) is designed to adjust at least one model parameter of the one-track model depending on the sensor signal.

2. A control device according to claim 1, wherein the observer arrangement (30, 44) comprises a Kalman filter.

3. A control device according to one of the preceding claims, wherein the at least one model parameter comprises the slip resistance (Cv, Ch).

4. A control device according to one of the preceding claims, in which at least one of the following sensors is coupled with the observer arrangement (30, 44) by means of the signal input (32): a lateral acceleration sensor (26), a yaw rate sensor (28).

5. A control device according to one of the preceding claims, in which a control device (22) for a "global-chassis control" is coupled with the observer arrangement (30) by means of the signal output (34), wherein the control device (22) is designed depending on the estimated values received via the signal output (34) to determine a majority of target magnitudes and to actuate a majority of actuators (12 to 20) for the adjustment of the driveability of the motor vehicle according to the target magnitudes.

6. A control device according to claim 5, wherein a target yaw rate, a target side slip angle and/or a target lateral acceleration are determined as target magnitudes.

**7.** A control device according to one of the preceding claims, in which at least one of the following actuators (12 to 20) is coupled with the observer arrangement (30) by means of the signal output (34): a superimposed steering system, a rear wheel steering, a torque-vectoring device, at least one active stabilizer, at least one active damper, a roll stabilizer, a drive and a brake intervention arrangement.

**8.** A motor vehicle (10) with a control device according to one of the preceding claims.

**9.** A method for the configuration of a control device according to one of claims 1 to 7, while the control device is operated in a test motor vehicle, which has at least one sensor for a measured value, for which the observer arrangement of the control device ascertains an estimated value, and depending on the measured values of the measuring device a parameter value is ascertained for a parameter of the observer arrangement, by which a distinction between the measured values and the estimated values satisfies a predetermined criterion, **characterized in that** at least one sensor is provided as a measuring device for a slide slip angle of the test motor vehicle and through comparison of the estimated slide slip angle with the measured slide slip angle covariance matrices are ascertained for a measurement noise and a process noise, which then are determined for the normal operation in the control device.

**Revendications**

**1.** Dispositif de commande pour un véhicule automobile (10), qui présente un dispositif d'observation (30, 44) qui est conçu pour recevoir via une entrée de signal (32) au moins un signal d'un capteur (26, 28) du véhicule automobile (10), déterminer en fonction du au moins un signal de capteur au moins une valeur d'estimation pour une rigidité de dérive (Cv, Ch) du véhicule automobile (10) et délivrer la au moins une valeur d'estimation déterminée à une sortie de signal (34), dans lequel le dispositif d'observation (30) est en outre conçu pour déterminer en fonction du au moins un signal du capteur une valeur d'estimation pour un angle de flottement ($\beta$) du véhicule automobile (10) et la délivrer à la sortie de signal (34), dans lequel le dispositif d'observation (30, 44) comprend au moins un dispositif parmi les dispositifs d'estimation suivants : un observateur de Luenberger ou un observateur stochastique, **caractérisé en ce que** :

une valeur paramétrique pour au moins l'un des paramètres suivants du dispositif d'observation (30, 44) est réglé sur une valeur constante prédéterminée : un bruit de mesure, un bruit de traitement ; et le dispositif d'observation (30, 44) comprend un modèle à voie unique du véhicule automobile (10), dans lequel le dispositif d'observation (30, 44) est conçu pour régler au moins un paramètre du modèle à voie unique en fonction du signal de capteur.

**2.** Dispositif de commande selon la revendication 1, dans lequel le dispositif d'observation (30, 44) comprend un filtre de Kalman.

**3.** Dispositif de commande selon l'une quelconque des revendications précédentes, dans lequel le au moins un paramètre de modèle comprend la rigidité de dérive (Cv, Ch).

**4.** Dispositif de commande selon l'une quelconque des revendications précédentes, dans lequel au moins l'un des capteurs suivants est couplé au dispositif d'observation (30, 44) via une entrée de signal (32) : un capteur d'accélération transversale (26) ou un capteur de vitesse de lacet (28).

**5.** Dispositif de commande selon l'une quelconque des revendications précédentes, dans lequel un dispositif de commande (22) est couplé au dispositif d'observation (30) via la sortie de signal (34) pour un contrôle de châssis global, dans lequel le dispositif de commande (22) est conçu pour fixer en fonction des valeurs d'estimation reçues via la sortie de signal (34) une pluralité de grandeurs théoriques et commander pour le réglage du comportement de conduite du véhicule automobile selon les grandeurs théoriques une pluralité d'acteurs, (12 à 20).

**6.** Dispositif de commande selon la revendication 5, dans lequel on fixe comme grandeurs théoriques une vitesse de lacet théorique, un angle de flottement théorique et/ou une accélération transversale théorique.

**7.** Dispositif de commande selon l'une quelconque des revendications précédentes, dans lequel au moins l'un des acteurs suivants (12 à 20) est couplé au dispositif d'observation (30) via la sortie de signal (34) : une direction de superposition, une direction par les roues arrière, un dispositif de vectorisation de couple, au moins un stabilisateur actif, au moins un amortisseur actif, un stabilisateur de roulis, une régulation d'intervention de commande et de freinage.

**8.** Véhicule automobile (10) comprenant un dispositif de commande selon l'une quelconque des revendications précédentes.

**9.** Procédé de configuration d'un dispositif de commande selon l'une quelconque des revendications 1 à 7 en mettant en service le dispositif de commande dans un véhicule automobile d'essai, qui présente au moins un capteur pour une grandeur de mesure pour laquelle le dispositif d'observation du dispositif de commande détermine une valeur d'estimation et l'on détermine en fonction de valeurs de mesure du dispositif de mesure pour un paramètre du dispositif d'observation une valeur paramétrique par laquelle une différence entre les valeurs de mesure et les valeurs d'estimation satisfait à un critère prédéterminé,

**caractérisé en ce que** :

on met en oeuvre comme dispositif de mesure au moins un capteur pour un angle de flottement du véhicule automobile d'essai et l'on détermine comme valeurs paramétriques par comparaison de l'angle de flottement estimé à l'angle de flottement mesuré des matrices de covariance qui sont alors fixées pour le fonctionnement normal dans le dispositif de commande.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19515046 A1
- DE 102007020169 A1
- DE 102008030667 A1
- WO 9967115 A1
- DE 4325413 A1
- EP 1743819 A1
- EP 2093114 A1